# EUROPEAN PATENT SPECIFICATION

(11) **EP 4 486 818 B1**
(45) Date of publication and mention of the grant of the patent: **06.05.2026**
(21) Application number: 23712944.0
(22) Date of filing: 03.03.2023
(51) Int. Cl.: C08G 65/26, C08G 65/323

(54) **SURFACTANT AGENTS DERIVED FROM LINEAR POLYGLYCEROL**
VON LINEAREM POLYGLYCERIN ABGELEITETE TENSIDMITTEL
AGENTS TENSIOACTIFS DÉRIVÉS DE POLYGLYCÉROL LINÉAIRE

(30) Priority: 04.03.2022 IT 202200004166
(43) Date of publication of application: 08.01.2025
(73) Proprietor: Università degli Studi di Bari "Aldo Moro", 70121 Bari (BA) (IT); Sharon Personal Care S.r.l., 20123 Milano (IT)
(72) Inventor: DENORA, Nunzio, 70125 Bari (BA) (IT); LAQUINTANA, Valentino, 70125 Bari (BA) (IT); FRANCO, Massimo, 70125 Bari (BA) (IT); LOPEDOTA, Angela Assunta, 70125 Bari (BA) (IT); CUTRIGNELLI, Annalisa, 70125 Bari (BA) (IT); LOPALCO, Antonio, 70125 Bari (BA) (IT); ARDUINO, Ilaria, 70125 Bari (BA) (IT); RACANIELLO, Giuseppe Francesco, 70125 Bari (BA) (IT); SIRAGUSA, Paolo, 20056 Trezzo Sull'Adda (MI) (IT); ANGELERI, Fabio, 20056 Trezzo Sull'Adda (MI) (IT); IACOBAZZI, Rosa Maria, Bari (BA) 70124 (IT); ANNESE, Cosimo, 70125 Bari (BA) (IT); PERRONE, Mara, 70125 Bari (BA) (IT)
(74) Representative: Trupiano, Federica
(86) International application number: PCT/IB2023/051989
(87) International publication number: WO 2023/166477

(56) References cited:
- WO-A1-2007/141248
- GUNKEL GESINE ET AL: "Effect of Polymer Brush Architecture on Antibiofouling Properties", BIOMACROMOLECULES, vol. 12, no. 11, 28 September 2011 (2011-09-28), US, pages 4169 - 4172, XP055971415, ISSN: 1525-7797, DOI: 10.1021/bm200943m
- ANJA THOMAS ET AL: "Beyond Poly(ethylene glycol): Linear Polyglycerol as a Multifunctional Polyether for Biomedical and Pharmaceutical Applications", BIOMACROMOLECULES, vol. 15, no. 6, 9 June 2014 (2014-06-09), pages 1935 - 1954, XP055194812, ISSN: 1525-7797, DOI: 10.1021/bm5002608

## Description

### Summary of the Invention

The present invention relates to novel derivatives of linear polyglycerol conjugated to fatty acids, their preparation process by linear controlled accretion of the polymer chain and their use as surfactant agents in various fields of the art, including cosmetics, pharmaceuticals and food.

### Technical background

Surfactants are called those substances that, by their chemical nature, tend to position themselves at the level of the liquid-gas. liquid-liquid and/or liquid-solid interfaces, lowering the surface tension between a liquid and a gas or the interfacial tension between a liquid and a liquid or a solid, and thus facilitating the wettability of the surfaces of solids or the dispersion of two or more liquids of different natures, or of liquids and gases. In general, they are organic compounds constituted by a group, called the head, which is polar and a group, called the tail, which is non-polar. Compounds with such characteristics are also called "amphiphilic" or "amphipathic". Once they exceed a particular concentration level, called the critical micellar concentration, said compounds tend to organize themselves into spherical supra-molecular aggregates, the micelles, which stabilize the emulsions by hindering the re-aggregation of their different component phases.

Depending on their chemical nature, various types of surfactants can be identified, generally divided into: non-ionic, anionic, cationic and amphoteric. On the other hand, the former have no charge on the polar head while the others are, respectively, negatively charged, positively charged or can express both charges depending on their environment.

In recent years, a number of surfactants of polymeric nature have also been studied and developed: macromolecules that therefore contain both hydrophilic portions and repeated hydrophobic zones in their structure. Compounds normally referred to as PEG (polyethylene glycol), polyethers derived from the polymerization reaction of ethylene oxide, can be grouped into this class. PEGs differ according to their molecular weight, and thus the number of "monomers" that make them up, and are commercially available in a wide range that can range, with reference to their molecular weight (MW, expressed in g/mol) from 300 to 10,000,000 g/mol. Their uses are varied, but in the field of biological applications, the derivatives weighing less than 400 g/mol have the limitation of being recognized as potentially toxic because of the possibility of promoting enzyme-catalyzed oxidation reactions and causing hypersensitivity.

Another group of polymeric surfactants that has been studied in recent years, structurally close to PEGs, are the polyglycerols (PGs): a heterogeneous chemical class of polymers that, compared to PEGs, has a greater variety of possible configurations and opportunities for functionalization. PGs derive from the polymerization of glycerol (1,2,3-propanthriol), the structures of their component chains can be linear, branched or cross-linked due to the presence of a large number of hydroxyl -OH groups, which also allow their possible functionalization with other molecules, such as for example fatty acid chains, to increase their lipophilic portion/affinity.

US2012157366 describes a complex system acting as a mild skin cleanser that comprises: a low-molecular-weight linear acrylic copolymer, a glycerol polymer (glycerol monomer number from 8 to 14) functionalized with C₁₀-C₁₈ chain fatty acids, and another class of surfactants selected from a wide range of anionic or amphoteric compounds.

EP2754684 describes the process of preparing hyper-ramified polyglycerols according to a synthetic poly-condensation route involving the use of calcium oxide catalysts and high temperatures and pressures.

WO 2007/141248 A1 discloses difunctionalized methylated linear polyglyerols, wherein one of the end groups may be a carboxylic acid group.

Thus, there is currently still a need for novel polymeric surfactant compounds, which are alternative to PEG-derived ones, that are versatile, can also be safely used in pharmaceutical, biomedical, cosmetic and/or food applications, and can be synthesized through an easily controllable and, possibly, environmentally friendly process.

### Objects of the invention

An object of the present invention is to provide a novel group of polymeric surfactant molecules obtained by condensation of glycerol, which are biocompatible and usable in a wide range of applications.

A further object of the present invention is to provide a synthetic process for obtaining said polymeric surfactants, which is based on controlled linear accretion of the chain from glycerol monomers.

Another object of the present invention is the use of said polymeric surfactants in all areas of the art that require the presence of compounds characterized by surfactant properties and particularly in the pharmaceutical, biomedical, cosmetic and food fields.

These and other objects are achieved by the subject matter of the present invention which provides novel linear polymeric surfactant agents derived from polyglycerol.

### Description of the invention

According to one of its aspects, object of the present invention are novel linear polymeric surfactant agents derived from glycerol (linPG) of general formula (I), which are conjugated with fatty acids 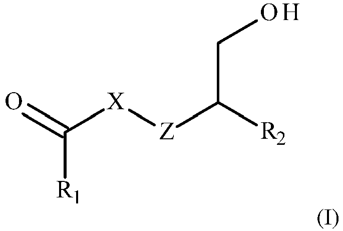 wherein:
R₁ is a saturated or unsaturated, linear alkyl chain preferably C3-C29, more preferably C9-C29, even more preferably selected from C9-C23, for example but not limited to, alkyl groups derived from saturated and linear carboxylic acids selected from decanoic, undecanoic, dodecanoic (lauric), tridecanoic, tetradecanoic (myristic), pentadecanoic, hexadecanoic (palmitic), heptadecanoic, octadecanoic (stearic), nonadecanoic, icosanoic (arachidic), docosanoic (behenic), tetracosanoic (lignoceric) acid and the like; or C9-C23 alkyl groups derived from mono-unsaturated and linear carboxylic acids selected from deca-9-enoic (caproleic), (Z)-dodeca-9-enoic (lauroleic), (Z)-tetradeca-9-enoic (myristoleic), (Z)-hexadeca-9-enoic (palmitoleic), (Z)-octadeca-9-enoic (oleic), (E)-octadeca-9-enoic (elaidic), (E)-octadeca-11-enoic (vaccenic), (Z)-icosa-9-enoic (gadoleic). (Z)-docosa-13-enoic (erucic), (E)-docosa-13-enoic (brassidic), (Z)-tetracosa-15-enoic (nervonic) acid; or C9-C23 alkyl groups derived from polyunsaturated and linear or branched carboxylic acids;
X is a linear, saturated or unsaturated, preferably C1-C10 alkyl chain; or a heteroatom preferably selected from O, S and N; or a saturated or unsaturated, linear or branched alkyl chain having one or more heteroatoms therein; said one or more heteroatoms preferably being O, S or N;
Z is a linear, saturated or unsaturated, preferably C1-C10 alkyl chain; or a heteroatom preferably selected from O, S and N; or a saturated or unsaturated, linear or branched alkyl chain having one or more heteroatoms therein; said one or more heteroatoms preferably being O, S or N;
R₂ is 2-hydroxymethyl 1,2 linPG, of formula: 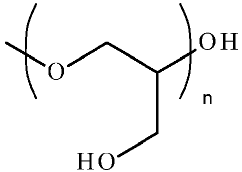
where n is an integer between 2 and 100.

Preferably, the average degree of polymerization "n" of glycerol is an integer between 2 and 50, more preferably 2 to 25, even more preferably between 2 and 15.

In a preferred embodiment R₁ is a C11-C17 saturated linear alkyl group, for example a derivative of lauric, or myristic, or palmitic or stearic acid, or a C17 mono-unsaturated group, for example a derivative of oleic acid.

According to a preferred embodiment of the invention, X is the heteroatom O or N. In a preferred embodiment of the invention, Z is -CH₂-, or -CH₂-CH₂-[N(CH₃)₂]⁺-CH₂. According to another embodiment of the present invention, R₂ is 2-hydroxymethyl 1,2 linPG with "n" between 2 and 15.

In a particularly preferred embodiment of the invention, R₁, X, Z and R₂ are, simultaneously, in the preferred forms referred to in the preceding paragraphs.

A further aspect of the present invention relates to the synthesis of novel surfactant agents deriving from linear polyglycerol functionalized with fatty acids of formula (I). Herein, the term "fatty acids" is used to identify aliphatic monocarboxylic acids normally present in esterified form in a plant or animal fat. In particular, it is intended to identify the saturated or unsaturated monocarboxylic acids, that have a chain containing 4 to 30 carbon atoms.

The synthesis route of the surfactant agents of the invention involves as a key reaction the controlled, linear accretion of the polymer chain from commercially available and/or suitably monomers modified on the group R of formula (II). Said polymerization reaction is called *Anionic Ring-Opening Polymerization,* or AROP.

Monomers used as starting product for the synthesis of linPG through AROP reactions have general formula (II) 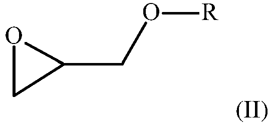 wherein R is a protective group of the hydroxyl group capable of restoring the hydroxyl group at the end of the polymerization reaction through reaction of acid deprotection or catalytic hydrogenation.

In a preferred embodiment of the invention said monomers are selected from:

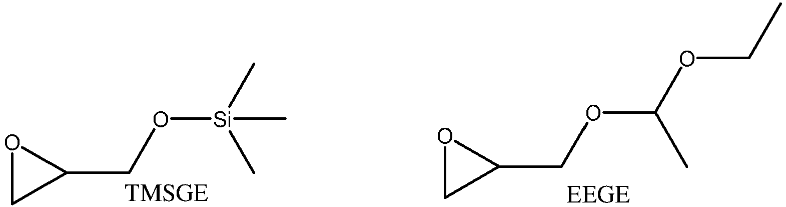

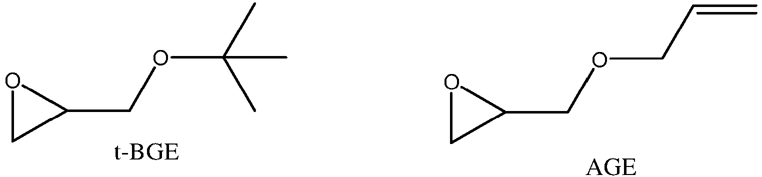

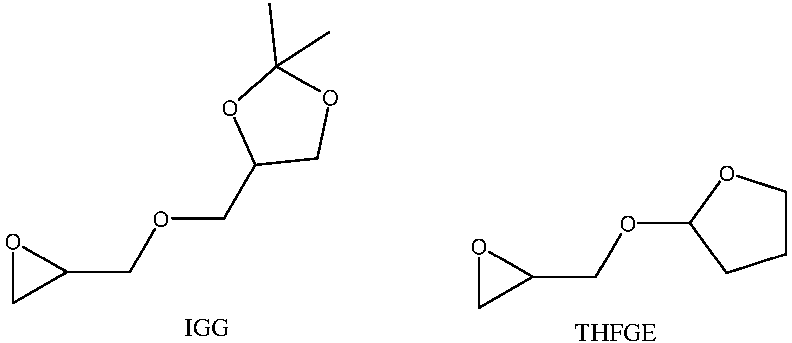

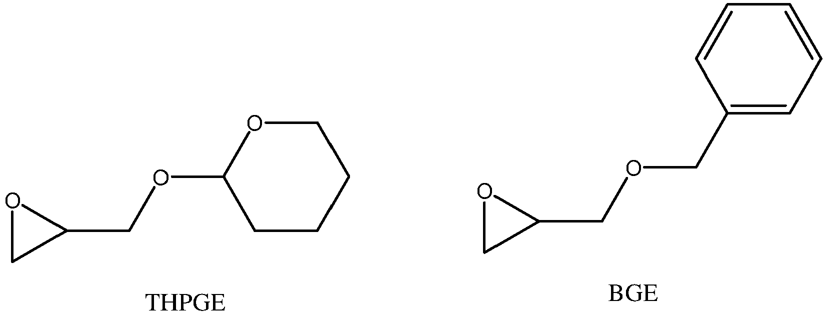

The acronyms identify, respectively: TMSGE trimethylsilyl glycidyl ether; EEGE ethoxyethyl glycidyl ether; t-BGE terbutyl glycidyl ether; AGE allyl glycidyl ether; IGG isopropylidene glyceryl glycidyl ether; THFGE tetrahydrofuranyl glycidyl ether; THPGE tetrahydropyranyl glycidyl ether; BGE benzyl glycidyl ether.

The AROP synthesis proceeds, starting from the monomers as previously described, according to several successive steps.

In a particular aspect of the invention, said synthesis proceeds according to the steps:
a) ring opening of at least one of said monomers of formula (II) wherein R is a protective group of the hydroxyl group as previously described, with at least one of said monomers being obtained in open form;
b) conjugation of said monomer in open form with a fatty acid of general formula (III) 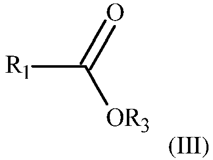 wherein R₁ is a saturated or unsaturated, linear or branched, alkyl chain preferably C3-C29, more preferably C9-C29, even more preferably selected from C9-C23, such as alkyl groups derived from the following saturated and linear carboxylic acids: decanoic, undecanoic, dodecanoic (lauric), tridecanoic, tetradecanoic (myristic), pentadecanoic, hexadecanoic (palmitic), heptadecanoic, octadecanoic (stearic), nonadecanoic, icosanoic (arachidic), docosanoic (behenic), tetracosanoic (lignoceric) acid and the like; or as C9-C23 alkyl groups derived from the following mono-unsaturated and linear carboxylic acids: deca-9-enoic (caproleic), (Z)-dodeca-9-enoic (lauroleic), (Z)-tetradeca-9-enoic (myristoleic), (Z)-hexadeca-9-enoic (palmitoleic), (Z)-octadeca-9-enoic (oleic), (E)-octadeca-9-enoic (elaidic), (E)-octadeca-11-enoic (vaccenic), (Z)-icosa-9-enoic (gadoleic). (Z)-docosa-13-enoic (erucic), (E)-docosa-13-enoic (brassidic), (Z)-tetracosa-15-enoic (nervonic) acid; or C9-C23 alkyl groups derived from polyunsaturated and linear or branched carboxylic acids; and R₃ is a protecting group of the carboxylic acid able to restore the carboxyl group at the end of the addition/elimination reaction, obtaining a base linPG chain, preferably R₃ can be a linear saturated alkyl chain, even more preferably C1-C6;
c) controlled linear accretion of said base linPG chain by successive additions of monomers of general formula (II), as previously described until the desired chain length is achieved;
d) deprotection of hydroxyl groups with elimination of R groups.

In Scheme 1 below, a synthesis process is depicted that is intended to exemplify, in a non-limiting way, the successive reactions leading to the preparation of 2-hydroxymethyl 1,2 linPG, according to the general formula (I) in which Z is -CH₂- and R₂ is

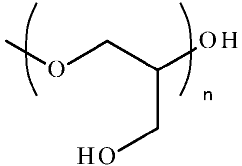

The reaction conditions of steps (a), (b) and (d) are those known to the skilled in the art, preferably (a) is an epoxy ring-opening reaction with amination in the presence of a 30-33% w/w ammonium hydroxide solution at a volume ratio of 1:10 between the two reagents, which reaction is carried out at room temperature of about 25°C for 12-24 h; (b) is an amidation reaction between the purified reaction product resulting from step (a) and the ester of a fatty acid, preferably in the absence of solvent, in molar ratio of 1:1 between the two reagents, which reaction is carried out by heating at 60-100°C for 24-72 h; and (d) is a dealkylation reaction of the protected hydroxyl groups (ORs) of the purified product resulting from step (c) with a 37% w/w hydrochloric acid solution, in molar excess of 20% hydrochloric acid to the OR groups to be dealkylated, which reaction is carried out at room temperature of about 25°C for 6-18 h.

The reaction conditions (c) that allow the controlled linear accretion of the base linPG chain involve the use of the purified reaction product resulting from step (b), in a molar ratio of 1, potassium ter-butoxylate in a molar ratio between 0.1 and 1 and monomer (II) in a molar ratio that varies depending on the length of the linear linPG chain, preferably this molar ratio is between 2 and 50. According to a preferred aspect of the invention, the reaction conditions involve the use of temperatures between 60 and 100°C, reaction times between 24 and 72 h and the absence of solvent.

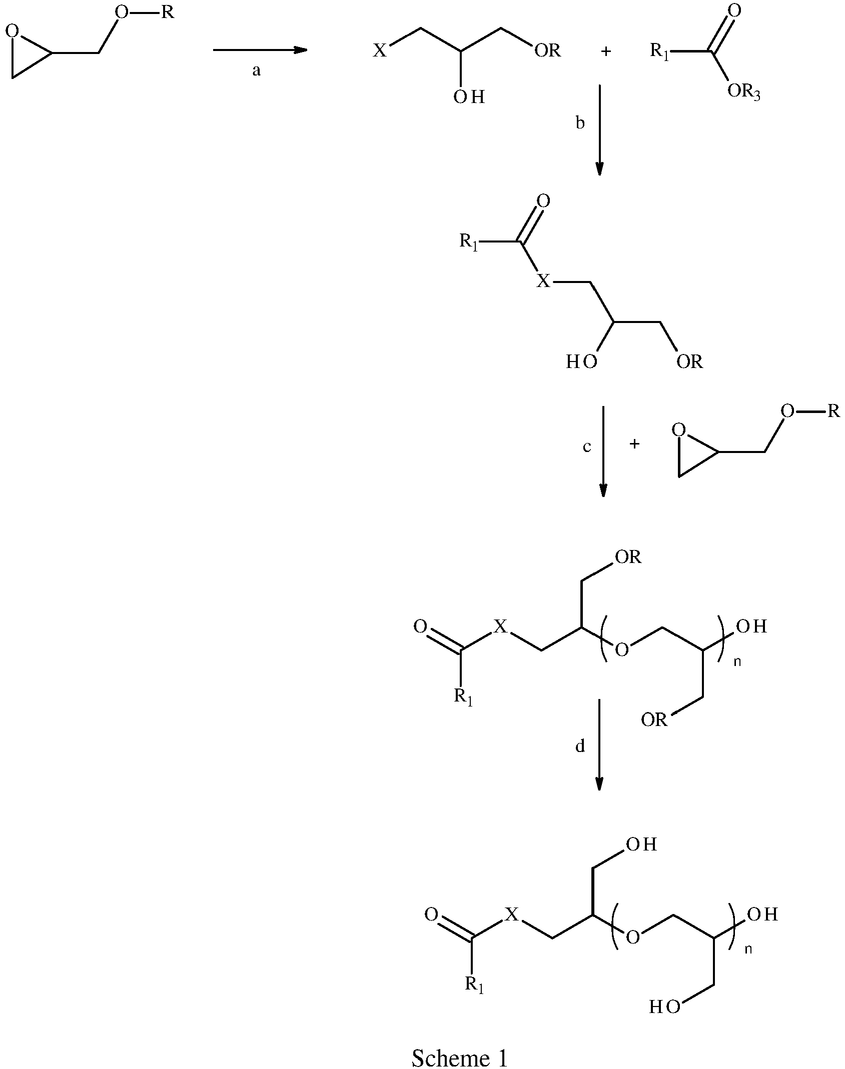

Scheme 1 shows the synthetic steps for preparing a preferred form of the compound of general formula (I). In particular, R is a hydroxyl protecting group, R₁ is the fatty acid alkyl chain as previously defined, R₃ is a carboxylic acid protecting group, which in a preferred embodiment of the invention, may be a linear saturated alkyl chain, preferably C1-C6, X is a saturated or unsaturated, linear or branched alkyl chain, preferably C1-C10, or a saturated or unsaturated, linear or branched alkyl chain having inside it one or more heteroatoms, said one heteroatom being preferably selected from O, S or N.

According to a preferred aspect of the invention, the reactions depicted in Scheme 1 occur under the following conditions: (a) monomer (II), 30-33% w/w ammonium hydroxide solution, about 25°C, 12-24 h; (b) purified reaction product resulting from step (a), ester of a fatty acid, solvent-free, 60-100°C, 24-72 h; (c) purified reaction product resulting from step (b), potassium ter-butoxylate, monomer (II), 60-100°C, 24-72 h, no solvent; (d) purified product resulting from step (c), 37% w/w hydrochloric acid solution, about 25°C, 6-18 h.

The novel polymeric surfactant agents of the invention can be used in all fields of the art involving their use, as known to the skilled in the art. In particular, due to their nature, the linear polyglycerol derivatives according to the present invention are generally biocompatible and therefore also usable in all areas where products containing them will get in close contact with humans, such as in the case of applications in the pharmaceutical, biomedical, cosmetic and food fields.

Thus, an aspect of the present invention provides for the use of the polymeric compounds of the invention as surfactant agents in all industrial applications involving the use of this type of additives. In particular, said surfactant agents can be used in the pharmaceutical, biomedical, cosmetic and food fields.

The amount of use of these compounds, in order to best perform their action, will vary depending on the type of application and the components to which they are added; the skilled in the art is perfectly capable of determining how and how much to use them depending on the situation.

The advantages associated with the surfactant agents object of the present invention are related to their versatility, which makes them usable in very different fields of the art and, due to their biocompatibility, also in areas whose products are intended for use in humans and animals.

The polymeric surfactant derivatives of linear polyglycerol according to the invention, moreover, can be considered viable alternatives to those derived from PEG but they do not have the disadvantages already mentioned above, which are mainly related to lower molecular weight compounds.

An advantage of the present invention is the use of said surfactants in the field of pharmaceutical and biomedical applications as micelles, liposomes, solid lipid nanoparticles and nano-structured lipid systems, which are useful as modified drug delivery systems and employ environmentally sustainable processes such as the preparation of solid-lipid nanoparticles by high-speed homogenization process in the aqueous phase or the preparation of liposomes by ethanol injection.

Furthermore, the surfactant agents of the present patent application can be prepared by the described synthetic route also object of the present invention, which is characterized by high yields, low production of waste products and a controlled process scheme resulting in a linPG with a low number of monomeric units and low polydispersion index. Finally, the synthetic route described and claimed is a synthesis route which is environmentally sustainable in that it involves limited use of organic solvents and catalysts and no use of halogenated solvents.

### Experimental section

### Examples of preparation of polymeric surfactants derived from the conjugation of oleic acid with linPG, according to the present invention.

### Example 1. Synthesis of the amide conjugate of oleic acid via N,N'-dibenzyl aminoethanol (Scheme 2)

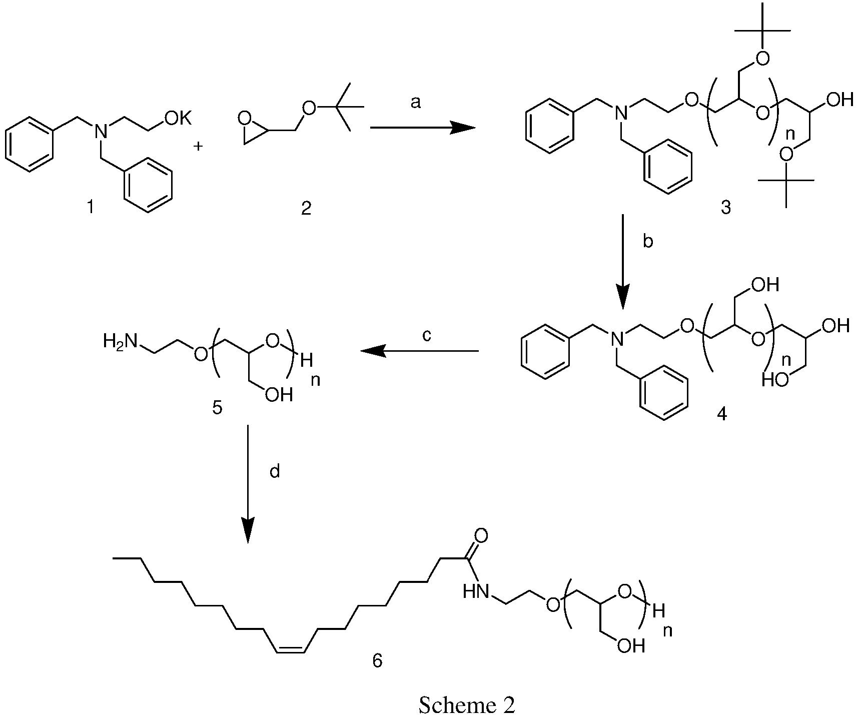

Compound 6 was prepared following the Synthesis Scheme 2 in accordance with the following conditions: (a) to prepare the compound, 1, N,N'-dibenzyl aminoethanol (5 g, 21 mmol) and potassium ter-butoxylate (2.35 g, 21 mmol) were dissolved in 50 ml THF and the reaction was carried out at reflux for 2 h. Then the solvent was removed by evaporation under reduced pressure, obtaining an orange-colored solid. The salt 1 was taken up with 250 ml THF, and t-BGE (2, 27.3 g, 210 mmol) was added to the resulting solution, and the reaction was carried out under magnetic stirring and reduced pressure at 80°C for 48 h. The reaction crude was dissolved in ethyl acetate (200 ml) and purified by extraction with a saturated aqueous solution of NaCl (3x200 ml). The organic phase was separated, anhydrified with Na₂SO₄ and brought to dryness under reduced pressure. The resulting product (3; 13.3 g) appears as an orange viscous oil. Yield of the reaction 80% w/w. MS-ESI analysis: m/z= 890.64 [M-K]-(M=C51H89NO11); (b) the purified reaction product from step (a) (3; 10 g) was solubilized with 200 ml THF and treated with 12N HCl (3 mol). The reaction mixture was kept at 25°C for 4 h. After that time, the reaction crude was neutralized with 1N NaOH and purified by extraction as in the previous step. Yield of reaction 90% w/w; MS-ESI analysis: m/z= 634.33 [M+Na]+(M=C31H49NO11) (c) the purified reaction product from step (b) (4; 5 g) was dissolved with 100 ml of 96° ethanol and placed in the hydrogenator in the presence of Pd/C catalyst (1% w/v) at 25°C and 3 bar (H₂) for 4 h. At the end of the reaction, the suspension was filtered on celite and brought to dryness. Finally, the reaction crude obtained was purified by extraction as in the previous steps, obtaining a whitish solid product. Yield of the reaction 95% w/w. MS-ESI analysis: m/z= 454.23 [M+Na]+(M=C17H34NO11); (d) the purified product resulting from step (c) (5; 1 g, 2.3 mmol) was solubilized in 100 ml DMF and EDAC (0.43 g, 2.8 mmol), NHS (0.32 g, 2.3 mmol) and after 30 min oleic acid (0.65 g, 2.3 mmol) were added to the resulting solution in order. The reaction was kept under stirring at 25°C for 12 h. At the end, the reaction mixture was brought to dryness and purified by extraction as previously described, obtaining the desired product as a viscous orange oil. Yield of the reaction 70% w/w. MS-ESI analysis: m/z= 718.48 [M+Na]+(M=C35H69NO12).

### Example 2. Synthesis of the amide conjugate of oleic acid via N,N'-dimethylethylen-1,2-diamine (Scheme 3)

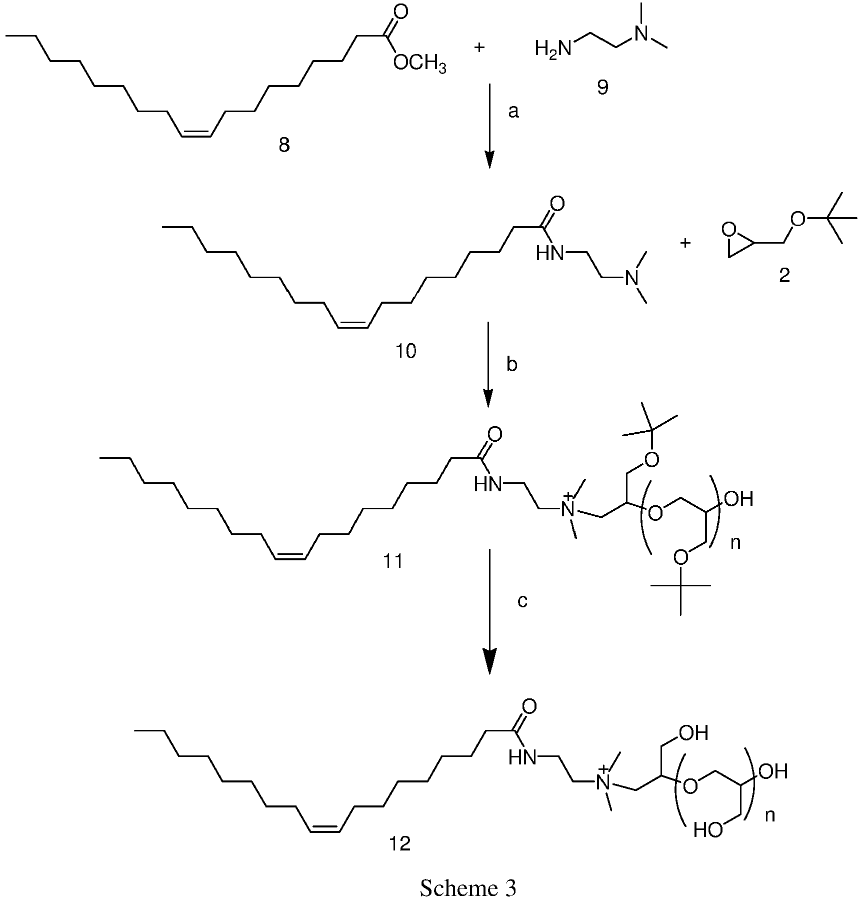

Compound (12) was prepared following Synthesis Scheme 3 in accordance with the following conditions: (a) methyl oleate (10 g, 33.7 mmol) and N,N'-dimethylethylene-1,2-diamine (14.5 g, 168.5 mmol) were mixed together in the absence of solvent. The reaction was carried out at 80°C for 12h. The reaction crude was dissolved in ethyl acetate (200 ml) and purified by extraction with 0.1N hydrochloric acid solution (3x200 ml) and then with salt water (3x200 ml). The organic phase was separated, anhydrified with Na₂SO₄ and brought to dryness under reduced pressure, obtaining the product as a yellowish oil. Reaction yield 80% w/w; MS-ESI analysis: m/z= 375.34 [M+Na]+(M=C22H44N2O); (b) the purified reaction product from step (a) (10; 5 g, 14.2 mmol) was reacted with t-BGE (18.5 g, 141.9 mmol), in the absence of solvent. The reaction was carried out under reduced pressure at 80°C for 12 h. The reaction crude was dissolved in ethyl acetate (200 ml) and purified by extraction with salt water (3x200 ml). The organic phase was separated, anhydrified with Na₂SO₄ and brought to dryness under reduced pressure. Reaction yield (65% w/w), MS-ESI analysis: m/z= 1028.85 [M+Na]+(M=C55H115N2O11); (c) the purified reaction product from step (b) (11; 2.5 g) was dissolved with 250 ml THF and treated with 37% w/w hydrochloric acid solution (50 ml, approx. 120 mmol) at 25°C for 6 h. At the end of the reaction, the reaction crude was treated with 10 N NaOH up to neutral pH and extracted with 500 ml ethyl acetate (3 times). The pooled organic phases were purified by salt water extraction (3x200 ml). The organic phase was separated, anhydrified with Na₂SO₄ and brought to dryness under reduced pressure. The resulting product appears as an orange viscous oil. Reaction yield 85% w/w; MS-ESI analysis: m/z= 746.25 [M+Na]+(M=C37H75N2O11).

### Example 3. Synthesis of the amide conjugate of oleic acid via aqueous NH₃ (Scheme 4)

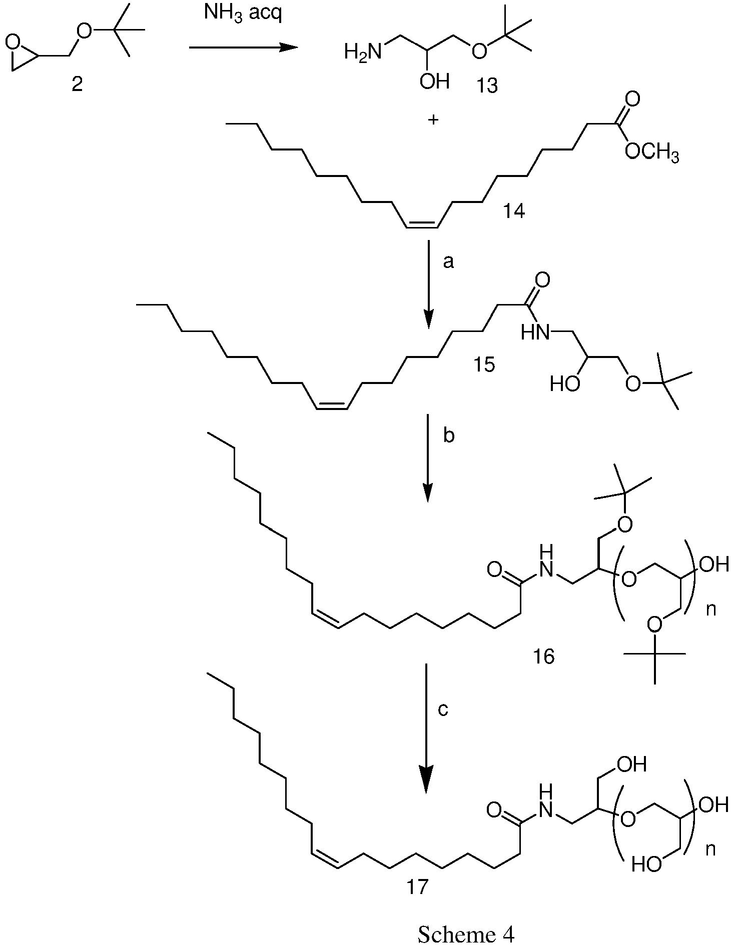

Compound (13) was prepared following Synthesis Scheme 4 in accordance with the following conditions: (a) t-BGE (10 g, 76.8 mmol) and a 30-33% w/w aqueous solution of ammonium hydroxide (0.8 mol) were mixed together in the absence of solvent. The reaction was carried out at 25°C for 12h. After removal of excess ammonia by evaporation under reduced pressure, the reaction crude was dissolved in ethyl acetate (200 ml) and purified by extraction with salt water (3x200 ml). The organic phase was separated, anhydrified with Na₂SO₄ and brought to dryness under reduced pressure. Yield of the reaction 80% w/w. MS-ESI analysis: m/z= 714 [M+Na]+(M=C35H65NO12); (b) the purified reaction product from step (a) (15; 5 g, 34.0 mmol) was reacted with methyl oleate (10.1 g, 34.0 mmol), in the absence of solvent. The reaction was carried out at 80°C for 72 h. The reaction crude was dissolved in THF (500 ml) and purified by extraction with salt water (3x200 ml). The organic phase was separated, anhydrified with Na₂SO₄ and brought to dryness under reduced pressure. Yield of the reaction 85% w/w. MS-ESI analysis: m/z= 434.37 [M+Na]+(M=C25H49NO3); (c) the purified reaction product resulting from step (b) (16; 10 g, 24.3 mmol) was reacted with t-BGE (31.6 g, 243 mmol) and potassium ter-butoxylate (2.73 g, 24.3 mmol) at about 80 °C for 48 h. At the end of the reaction, the reaction crude is purified as in the previous step. Yield of the reaction 85% w/w. MS-ESI analysis: m/z= 954.76 [M+Na]+(M=C53H105NO11); d) the purified reaction product from step (c) (17; 2.5 g) was dissolved with 250 ml THF and treated with 37% w/w hydrochloric acid solution (50 ml, approx. 120 mmol) at 25°C for 12 h. At the end of the reaction, the reaction crude was treated with 10 N NaOH up to neutral pH and treated repeatedly (3 to 5 times) with 500 ml of 96% v/v ethanol to precipitate the salts. The pooled organic phases were filtered on paper filters and brought to dryness under reduced pressure. Yield of the reaction 90% w/w. MS-ESI analysis: m/z= 674.45 [M+Na]+(M=C33H65NO11).

Compound (7) was renamed "oleic acid polyglyceryl-5 amidic derivative" in Examples 4-7 below.

### Examples of use in the cosmetic field of polymeric surfactants derived from the conjugation of oleic acid with linPG, according to the present invention.

### Example 4. Preparation of an O/W emulsion.

The emulsion was prepared as follows:

**Table 1. Composition of the O/W emulsion comprising a polymeric surfactant of the invention in Phase A (Oleic Acid Polyglyceryl-5 Amidic Derivate)**

| **Trade name** | **INCI name** | **%** | **Function** |
|---|---|---|---|
| **PHASE A** | | | |
| WATER | Water | 77.00 | Solvent |
| OLEIC ACID POLYGLYCERYL-5 AMIDIC DERIVATE | - | 2.00 | Surfactant |
| HYDROXYACETOPHENONE | Hydroxyacetophenone | 0.50 | Preservative |
| GLYCERIN | Glycerin | 3.00 | Humectant |

| **PHASE B** | | | |
|---|---|---|---|
| EMULPHARMA^{®} COREOSOME | Cetearyl Alcohol, Glyceryl Stearate, Sorbitan Stearate, Cetearyl Glucoside | 5.00 | Sensory emulsifier |
| CAPRYLIC/CAPRIC TRIGLYCERIDE | Caprylic/Capric Triglyceride | 10.00 | Emollient |
| GLYCERYL STEARATE | Glyceryl Stearate | 3.00 | Lipophilic consistency factor |

| **PHASE C** | | | |
|---|---|---|---|
| LACTOBACILLUS FERMENT | Lactobacillus Ferment | 2.00 | Preservative |
| ETHYLHEXYLGLYCERIN | Ethylhexylglycerin | 0.50 | Preservative booster |

The components of Phase A were weighed into a crucible of appropriate volume and mixed at 75°C-80°C until a homogeneous mixture was obtained. The components of Phase B were weighed into a crucible of appropriate volume and mixed at 75°C-80°C until a homogeneous mixture was obtained. Phase B was then added to Phase A and homogenized by cooling to 40°C. Phase C was added to this mixture by cooling to 25°C during homogenization. Finally, the air was removed and the pH was checked and, if necessary, adjusted to pH 5.0-5.5. The emulsion thus prepared has a light beige semi-viscous appearance.

### Example 5. Preparation of micellar water

The micellar water was prepared as follows:

**Table 2. Composition of the micellar water comprising a polymeric surfactant of the invention in Phase A (Oleic Acid Polyglyceryl-5 Amidic Derivate)**

| **Trade name** | **INCI name** | **%** | **Function** |
|---|---|---|---|
| **PHASE A** | | | |
| WATER | Water | 91.00 | Solvent |
| OLEIC ACID POLYGLYCERYL-5 AMIDIC DERIVATE | - | 3.00 | Surfactant |
| RESASSOL^{®} DN | Diglycerin | 3.00 | Humectant |
| LACTOBACILLUS FERMENT | Lactobacillus Ferment | 2.00 | Preservative |
| 1,2-HEXANEDIOL, CAPRYLYL GLYCOL, TROPOLONE | 1,2-Hexanediol, Caprylyl Glycol, Tropolone | 1.00 | Preservative |

The components of Phase A were weighed into a beaker of appropriate volume and mixed at 20-25°C until a homogeneous mixture was obtained. The pH was checked and, if necessary, adjusted to pH 7.0-7.5. The micellar water thus prepared appears as a transparent amber liquid.

### Example 6. Preparation of a shampoo

The shampoo was prepared as follows:

**Table 3. Composition of the shampoo comprising a polymeric surfactant of the invention in Phase A (Oleic Acid Polyglyceryl-5 Amidic Derivate)**

| **Trade name** | **INCI name** | **%** | **Function** |
|---|---|---|---|
| **PHASE A** | | | |
| WATER | Water | 56.00 | Solvent |
| OLEIC ACID POLYGLYCERYL-5 AMIDIC DERIVATE | - | 3.00 | Surfactant |
| SODIUM LAURETH SULFATE SOL. 27% | Water, Sodium Laureth Sulfate | 30.00 | Anionic surfactant |
| SODIUM GLUCONATE | Sodium Gluconate | 0.10 | Chelating agent |
| PHENOXYETHANOL, ETHYLHEXYLGLYCERIN | Phenoxyethanol, Ethylhexylglycerin | 0.90 | Preservative |

| **PHASE B** | | | |
|---|---|---|---|
| COCAMIDOPROPYL BETAINE SOL. 30% | Water, Cocamidopropyl Betaine | 10.00 | Amphoteric surfactant |

The components of Phase A were weighed into a beaker of appropriate volume and mixed at 20°C-25°C until a homogeneous mixture was obtained. The components of Phase B were weighed into a beaker of appropriate volume and mixed at 20°C-25°C until a homogeneous mixture was obtained. Phase B was then added slowly to Phase A at 20-25°C while stirring continuously until a homogeneous mixture was obtained. Finally, the pH was checked and, if necessary, adjusted to pH 5.0-5.5. The shampoo thus prepared appears as a transparent amber liquid.

### Examples of use in the pharmaceutical field of polymeric surfactants derived from the conjugation of oleic acid with linPG, according to the present invention.

### Example 7. Preparation of polymeric micelles of poly(L-lactic)-co-(L-glycolic) acid-polyethylene glycol (PLGA-PEG).

**Table 4. Composition of the mixture comprising a polymeric surfactant of the invention in Phase B (Oleic Acid Polyglyceryl-5 Amidic Derivate)**

| **Trade name** | **%** | **Function** |
|---|---|---|
| **PHASE A** | | |
| PLGA-PEG | 1 | Block polymer |
| DMF | | solvent |

| **PHASE B** | | |
|---|---|---|
| OLEIC ACID POLYGLYCERYL-5 AMIDIC DERIVATE | 1.00 | Surfactant |
| PLURONIC F68 | 1.00 | surfactant |
| WATER | | Solvent |

The preparation of polymeric micelles of the amphiphilic block polymer *poly-(L-lactic)-co-(L-glycolic) acid-polyethylene glycol* PLGA-PEG with a ratio of the monomers of the PLGA portion equal to L:G 50:50 and MW= 30 kDa; PEG portion MW= 5 kDa was carried out by using a nano-precipitation process by mixing phase A (10 ml) and phase B (20 ml) using a microfluidic device (phase A flow = 0.5 ml/min; phase B flow = 1 ml/min ). The micelles were collected by precipitation in ultracentrifuge (100000 g, 30 min, 4°C), and the pellet was resuspended in 10 ml purified water (MilliQ, Millipore) and centrifuged as described before. The purification procedure was repeated 2 times and finally the micelles were resuspended in 1 ml purified water (MilliQ, Millipore) and transferred at a temperature of 25°C.

### Example 8. Preparation of solid-lipid nanoparticles (SLNs) by high-pressure homogenization.

**Table 5. Composition of the SLNs comprising a polymeric surfactant of the invention in Phase B (Oleic Acid Polyglyceryl-5 Amidic Derivate)**

| **Trade name** | **%** | **Function** |
|---|---|---|
| **PHASE A** | | |
| CETYL PALMITATE | | Lipophilic consistency factor |

| **PHASE B** | | |
|---|---|---|
| OLEIC ACID POLYGLYCERYL-5 AMIDIC DERIVATE | 2.00 | Surfactant |
| PLURONIC F68 | 2.00 | |
| WATER | | Solvent |

The preparation of SLNs was carried out by using a hot, high-pressure homogenization process as described below. 2 g cetyl palmitate was melted at 75 °C in a crucible of suitable volume. Next, the melted lipid phase was dispersed in an aqueous solution heated at 75°C of surfactant by using a high-speed homogenizer (20,000 rpm for 15 min with Ultra-Turrax homogenizer, IKA, T25). The obtained pre-emulsion was homogenized at 80°C by using a high-pressure homogenizer (2000 bar, GEA NIRO PandaPLUS2000) and performing 5 consecutive cycles of homogenization. The SLN nanoparticles were obtained after rapid cooling at 4°C for 5 min and finally transferred at a temperature of 25°C.

### Example 9. Preparation of ultra-deformable liposomes by ethanol injection

**Table 6. Composition of the liposomes comprising a polymeric surfactant of the invention in Phase A (Oleic Acid Polyglyceryl-5 Amidic Derivate)**

| **Trade name** | **%** | **Function** |
|---|---|---|
| **PHASE A** | | |
| PHOSPHATIDYLCHOLINE | 50-80 | Main component |
| CHOLESTEROL | 10-20 | Secondary component |
| OLEIC ACID POLYGLYCERYL-5 AMIDIC DERIVATE | 2-4 | Surfactant |
| SODIUM CHOLATE | 0-10 | Surfactant |
| ETHANOL | | |

| **PHASE B** | | |
|---|---|---|
| DISTILLED WATER | | Solvent |

The liposomes were prepared by the ethanol injection method. Phosphatidylcholine, cholesterol and surfactants were solubilized in 96% ethanol. The resulting organic phase was softly heated to 40 ± 2°C to improve cholesterol solubility and mutual miscibility among the different components. The ethanol solution was then injected into 85 ml water preheated to 60 ± 5°C, setting the injection rate at 500 µl/min. The liposomes formed spontaneously with continuous agitation at 500 rpm by using a magnetic stirrer. Ethanol was evaporated under reduced pressure by using a rotary evaporator (Heidolph, Germany).

## Claims

1. A compound of formula (I) 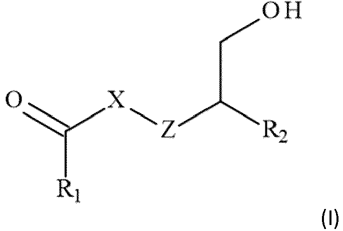 wherein:
R₁ is a saturated or unsaturated, linear or branched, alkyl chain preferably C3-C29;
X is a saturated or unsaturated, linear or branched, preferably C1-C10 alkyl chain; or a heteroatom preferably selected from O, S and N; or a saturated or unsaturated, linear or branched alkyl chain having one or more heteroatoms therein; said one or more heteroatoms preferably being O, S or N;
Z is a saturated or unsaturated, linear or branched, preferably C1-C10 alkyl chain; or a heteroatom preferably selected from O, S and N; or a saturated or unsaturated, linear or branched alkyl chain having one or more heteroatoms therein; said one or more heteroatoms preferably being O, S or N; and
R₂ is 2-hydroxymethyl 1,2 linPG, of formula: 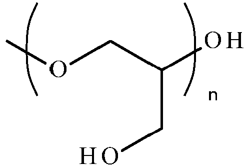 where n is an integer between 2 and 100.

2. The compound of formula (I) according to claim 1, **characterized in that** R₁ is a C9-C23 alkyl chain derived from saturated and linear carboxylic acids selected from decanoic, undecanoic, dodecanoic (lauric), tridecanoic, tetradecanoic (myristic), pentadecanoic, hexadecanoic (palmitic), heptadecanoic, octadecanoic (stearic), nonadecanoic, icosanoic (arachidic), docosanoic (behenic), tetracosanoic (lignoceric) acid and the like; or derived from mono-unsaturated and linear carboxylic acids selected from deca-9-enoic (caproleic), (Z)-dodeca-9-enoic (lauroleic), (Z)-tetradeca-9-enoic (myristoleic), (Z)-hexadeca-9-enoic (palmitoleic), (Z)-octadeca-9-enoic (oleic), (E)-octadeca-9-enoic (elaidic), (E)-octadeca-11-enoic (vaccenic), (Z)-icosa-9-enoic (gadoleic), (Z)-docosa-13-enoic (erucic), (E)-docosa-13-enoic (brassidic), (Z)-tetracosa-15-enoic (nervonic) acid; or derived from polyunsaturated and linear or branched carboxylic acids.

3. The compound of formula (I) according to claim 1, **characterized in that** n is an integer between 2 and 50, preferably between 2 and 25, more preferably between 2 and 15.

4. The compound of formula (I) according to claim 1, **characterized in that** R₁ is a C11-C17 saturated linear alkyl group, preferably a derivative of lauric, or myristic, or palmitic, or stearic acid, or a C17 mono-unsaturated group, preferably a derivative of oleic acid; X is O or N; Z is CH₂-, or -CH₂-CH₂-[N(CH₃)₂]⁺-CH₂-; and n is between 2 and 15.

5. A synthesis of the compound of general formula (I) according to claim 1 by controlled linear accretion, **characterized in that** the base monomer has general formula (II) 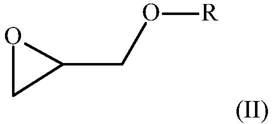 where R is a protective group of the hydroxyl group capable of restoring the hydroxyl group at the end of the polymerization reaction through reaction of acid deprotection or catalytic hydrogenation.

6. The synthesis according to claim 5 **characterized in that** said base monomer of general formula (II) is selected from TMSGE (trimethylsilyl glycidyl ether), EEGE (,ethoxyethyl glycidyl ether) t-BGE (terbutyl glycidyl ether), AGE (allyl glycidyl ether), IGG (isopropylidene glyceryl glycidyl ether), THFGE (tetrahydrofuranyl glycidyl ether), THPGE (tetrahydropyranyl glycidyl ether) and BGE (benzyl glycidyl ether).

7. The synthesis according to claim 5, **characterized in that** an initial step of said synthesis is constituted by the conjugation, preceded by the opening of the epoxy ring of said monomer of general formula (II), of said monomer in open form with a fatty acid of formula (III) 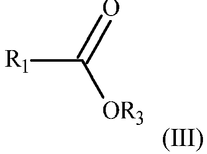 wherein R₁ is a saturated or unsaturated, linear or branched, preferably C3-C29 linear alkyl chain, and R₃ is a protecting group of the carboxylic acid capable of restoring the carboxylic group at the end of the addition/elimination reaction resulting in a base linPG chain, preferably is a saturated linear C1-C6 alkyl chain.

8. The synthesis according to claim 5, **characterized in that** said base linPG chain undergoes AROP controlled linear accretion by addition of potassium tert-butoxylate and monomer (II), at 60-100 °C, for 24-72 h and in the absence of solvent, to provide the compound of general formula (I) according to claim 1, wherein R₂ is 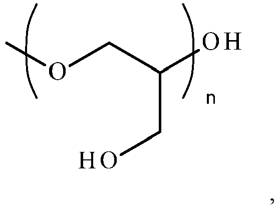 where n is an integer between 2 and 100.

9. Use of the compound of general formula (I) according to claim 1, as surfactant.

10. Use according to claim 9 in pharmaceutical, biomedical, cosmetic, and/or food applications.

## Patentansprüche

1. Verbindung der Formel (I) 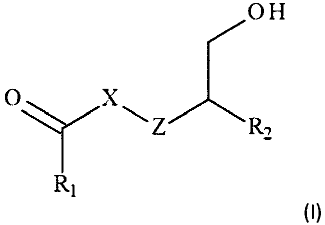 worin:
R₁ eine gesättigte oder ungesättigte, lineare oder verzweigte Alkylkette ist, vorzugsweise C3-C29;
X eine gesättigte oder ungesättigte, lineare oder verzweigte, vorzugsweise C1-C10-Alkylkette ist; oder ein Heteroatom, vorzugsweise ausgewählt aus O, S und N; oder eine gesättigte oder ungesättigte, lineare oder verzweigte Alkylkette, die ein oder mehrere Heteroatome enthält, wobei das eine oder die mehreren Heteroatome vorzugsweise O, S oder N sind;
Z eine gesättigte oder ungesättigte, lineare oder verzweigte, vorzugsweise C1-C10-Alkylkette ist; oder ein Heteroatom, vorzugsweise ausgewählt aus O, S und N; oder eine gesättigte oder ungesättigte, lineare oder verzweigte Alkylkette, die ein oder mehrere Heteroatome enthält, wobei das eine oder die mehreren Heteroatome vorzugsweise O, S oder N sind; und
R₂ 2-Hydroxymethyl-1,2-linPG gemäß der Formel ist: 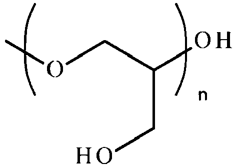
wobei n eine ganze Zahl zwischen 2 und 100 ist.

2. Verbindung der Formel (I) nach Anspruch 1, **dadurch gekennzeichnet, dass** R₁ eine C9-C23-Alkylkette ist, die von gesättigten und linearen Carbonsäuren abgeleitet ist, ausgewählt aus Decansäure, Undecansäure, Dodecansäure (Laurinsäure), Tridecansäure, Tetradecansäure (Myristinsäure), Pentadecansäure, Hexadecansäure (Palmitinsäure), Heptadecansäure, Octadecansäure (Stearinsäure), Nonadecansäure, Icosansäure (Arachinsäure), Docosansäure (Behensäure), Tetracosansäure (Lignocerinsäure) und dergleichen; oder von einfach ungesättigten und linearen Carbonsäuren abgeleitet ist, ausgewählt aus Deca-9-ensäure (Caproleinsäure), (Z)-Dodeca-9-ensäure (Lauroleinsäure), (Z)-Tetradeca-9-ensäure (Myristoleinsäure), (Z)-Hexadeca-9-ensäure (Palmitoleinsäure), (Z)-Octadeca-9-ensäure (Ölsäure), (E)-Octadeca-9-ensäure (Elaidinsäure), (E)-Octadeca-11-ensäure (Vaccensäure), (Z)-Icosa-9-ensäure (Gadoleinsäure), (Z)-Docosa-13-ensäure (Erucasäure), (E)-Docosa-13-ensäure (Brassidinsäure), (Z)-Tetracosa-15-ensäure (Nervonsäure); oder von mehrfach ungesättigten und linearen oder verzweigten Carbonsäuren abgeleitet ist.

3. Verbindung der Formel (I) nach Anspruch 1, **dadurch gekennzeichnet, dass** n eine ganze Zahl zwischen 2 und 50 ist, vorzugsweise zwischen 2 und 25, besonders bevorzugt zwischen 2 und 15.

4. Verbindung der Formel (I) nach Anspruch 1, **dadurch gekennzeichnet, dass** R₁ eine gesättigte lineare C11-C17-Alkylgruppe ist, vorzugsweise ein Derivat der Laurin-, Myristin-, Palmitin- oder Stearinsäure, oder eine einfach ungesättigte C17-Gruppe ist, vorzugsweise ein Derivat der Ölsäure; X O oder N ist; Z CH₂- oder -CH₂-CH₂-[N(CH₃)₂]⁺-CH₂- ist; und n zwischen 2 und 15 liegt.

5. Syntheseverfahren der Verbindung der allgemeinen Formel (I) nach Anspruch 1 durch kontrollierte lineare Akkretion, **dadurch gekennzeichnet, dass** das Basismonomer die allgemeine Formel (II) hat 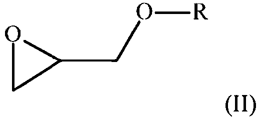 wobei R eine Schutzgruppe der Hydroxylgruppe ist, die in der Lage ist, die Hydroxylgruppe am Ende der Polymerisationsreaktion durch eine Säure-Entschützung oder katalytische Hydrierung wiederherzustellen.

6. Syntheseverfahren nach Anspruch 5, **dadurch gekennzeichnet, dass** das Basismonomer der allgemeinen Formel (II) ausgewählt ist aus TMSGE (Trimethylsilyl-glycidylether), EEGE (Ethoxyethyl-glycidylether), t-BGE (tert-Butyl-glycidylether), AGE (Allyl-glycidylether), IGG (Isopropyliden-glycerylglycidylether), THFGE (Tetrahydrofuranyl-glycidylether), THPGE (Tetrahydropyranyl-glycidylether) und BGE (Benzyl-glycidylether).

7. Syntheseverfahren nach Anspruch 5, **dadurch gekennzeichnet, dass** ein Anfangsschritt der Synthese durch die Konjugation, der die Öffnung des Epoxidrings des Monomers der allgemeinen Formel (II) vorausgeht, des Monomers in offener Form mit einer Fettsäure der Formel (III) gebildet wird 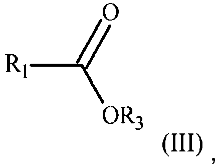 wobei R₁ eine gesättigte oder ungesättigte, lineare oder verzweigte, vorzugsweise lineare C3-C29-Alkylkette ist und R₃ eine Schutzgruppe der Carbonsäure ist, die in der Lage ist, die Carboxylgruppe am Ende der Additions-/Eliminationsreaktion, die zu einer Basis-linPG-Kette führt, wiederherzustellen, vorzugsweise eine gesättigte lineare C1-C6-Alkylkette ist.

8. Syntheseverfahren nach Anspruch 5, **dadurch gekennzeichnet, dass** die Basis-linPG-Kette einer AROP-kontrollierten linearen Akkretion durch Zugabe von Kalium-*tert*-butoxylat und Monomer (II) bei 60-100 °C über 24-72 h und in Abwesenheit eines Lösungsmittels unterzogen wird, um die Verbindung der allgemeinen Formel (I) nach Anspruch 1 zu erhalten, wobei R₂ 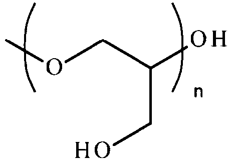 ist, wobei n eine ganze Zahl zwischen 2 und 100 ist.

9. Verwendung der Verbindung der allgemeinen Formel (I) nach Anspruch 1 als Tensid.

10. Verwendung nach Anspruch 9 in pharmazeutischen, biomedizinischen, kosmetischen und/oder Lebensmittel-Anwendungen.

## Revendications

1. Composé de formule (I) dans lequel : 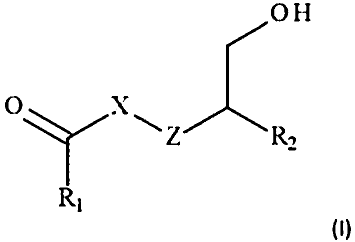
R₁ représente une chaîne alkyle saturée ou insaturée, linéaire ou ramifiée, de préférence en C3 à C29 ;
X représente une chaîne alkyle saturée ou insaturée, linéaire ou ramifiée, de préférence en C1 à C10 ; ou un hétéroatome choisi de préférence parmi O, S et N ; ou une chaîne alkyle saturée ou insaturée, linéaire ou ramifiée, ayant un ou plusieurs hétéroatomes dans celle-ci ; ledit ou lesdits hétéroatomes étant de préférence O, S ou N ;
Z est une chaîne alkyle saturée ou insaturée, linéaire ou ramifiée, de préférence en C1-C10 ; ou un hétéroatome choisi de préférence parmi O, S et N ; ou une chaîne alkyle saturée ou insaturée, linéaire ou ramifiée, contenant un ou plusieurs hétéroatomes ; lesdits un ou plusieurs hétéroatomes étant de préférence O, S ou N ; et
R₂ représente le 2-hydroxyméthyl 1,2 linPG, de formule : 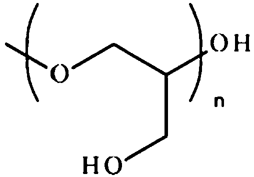
où n représente un nombre entier compris entre 2 et 100.

2. Composé de formule (I) selon la revendication 1, **caractérisé en ce que** R₁ représente une chaîne alkyle en C9-C23 dérivée d'acides carboxyliques saturés et linéaires choisis parmi les acides décanoïque, undécanoïque, dodécanoïque (laurique), tridécanoïque, tétradécanoïque (myristique), pentadécanoïque, hexadécanoïque (palmitique), heptadécanoïque, octadécanoïque (stéarique), nonadécanoïque, icosanoïque (arachidique), docosanoïque (béhénique), tétracosanoïque (lignocérique) et similaires ;
ou dérivée d'acides carboxyliques mono-insaturés et linéaires choisis parmi l'acide déca-9-énoïque (caproïque), l'acide (Z)-dodéca-9-énoïque (lauroléique), l'acide (Z)-tétradéca-9-énoïque (myristoléique), l'acide (Z)-hexadéca-9-énoïque (palmitoléique), l'acide (Z)-octadéca-9-énoïque (oléique), l'acide (E)-octadéca-9-énoïque (élaïdique), l'acide (E)-octadéca-11-énoïque (vaccénique), l'acide (Z)-icosa-9-énoïque (gadoleique), l'acide (Z)-docosa-13-énoïque (érucique), l'acide (E)-docosa-13-énoïque (brassidique), l'acide (Z)-tétracosa-15-énoïque (nervonique) ; ou dérivé d'acides carboxyliques polyinsaturés et linéaires ou ramifiés.

3. Composé de formule (I) selon la revendication 1, **caractérisé en ce que** n représente un nombre entier compris entre 2 et 50, de préférence entre 2 et 25, plus préférablement entre 2 et 15.

4. Composé de formule (I) selon la revendication 1, **caractérisé en ce que** R₁ représente un groupe alkyle linéaire saturé en C11-C17, de préférence un dérivé de l'acide laurique, myristique, palmitique ou stéarique, ou un groupe mono-insaturé en C17, de préférence un dérivé de l'acide oléique ; X représente O ou N ; Z représente CH₂ -, ou -CH₂ -CH₂ -[N(CH₃ )₂]⁺-CH₂ - ; et n est compris entre 2 et 15.

5. Synthèse du composé de formule générale (I) selon la revendication 1 par accrétion linéaire contrôlée, **caractérisée en ce que** le monomère de base a la formule générale (II) 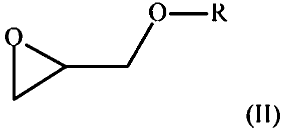 où R représente un groupe protecteur du groupe hydroxyle capable de restaurer le groupe hydroxyle à la fin de la réaction de polymérisation par réaction de déprotection acide ou d'hydrogénation catalytique.

6. Synthèse selon la revendication 5, **caractérisée en ce que** ledit monomère de base de formule générale (II) est choisi parmi TMSGE (triméthylsilyl glycidyl éther), EEGE (éthoxyéthyl glycidyl éther), t-BGE (terbutyl glycidyl éther), AGE (allyl glycidyl éther), IGG (isopropylidène glycéryl glycidyl éther), THFGE (tétrahydrofuranyl glycidyl éther), THPGE (tétrahydropyranyl glycidyl éther) et BGE (benzyl glycidyl éther).

7. Synthèse selon la revendication 5, **caractérisée en ce qu'**une étape initiale de ladite synthèse est constituée par la conjugaison, précédée de l'ouverture du cycle époxy dudit monomère de formule générale (II), dudit monomère sous forme ouverte avec un acide gras de formule (III) 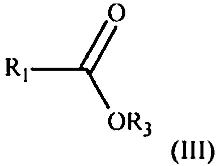 dans lequel R₁ représente une chaîne alkyle saturée ou insaturée, linéaire ou ramifiée, de préférence linéaire en C3-C29, et R₃ représente un groupe protecteur de l'acide carboxylique capable de restaurer le groupe carboxylique à la fin de la réaction d'addition/élimination aboutissant à une chaîne linPG de base, de préférence une chaîne alkyle linéaire saturée en C1-C6.

8. Synthèse selon la revendication 5, **caractérisée en ce que** ladite chaîne linPG de base subit une accrétion linéaire contrôlée par AROP par addition de tert-butoxylate de potassium et de monomère (II), à 60-100 °C, pendant 24-72 h et en l'absence de solvant, pour fournir le composé de formule générale (I) selon la revendication 1, dans lequel R₂ représente 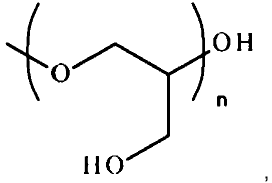 où n représente un nombre entier compris entre 2 et 100.

9. Utilisation du composé de formule générale (I) selon la revendication 1, comme tensioactif.

10. Utilisation selon la revendication 9 dans des applications pharmaceutiques, biomédicales, cosmétiques et/ou alimentaires.
